Europäisches Patentamt

European Patent Office

Office européen des brevets

(11) Veröffentlichungsnummer : **0 087 082**
**B1**

(12) **EUROPÄISCHE PATENTSCHRIFT**

(45) Veröffentlichungstag der Patentschrift :
24.04.85

(21) Anmeldenummer : 83101323.0

(22) Anmeldetag : 11.02.83

(51) Int. Cl.⁴ : **C 09 K 19/02, C 09 K 19/36,**
**G 01 T 1/04, G 01 K 11/16**

(54) **Herstellung und Verwendung von cholesterinischen Flüssigkristallen.**

(30) Priorität : 18.02.82 DE 3205892

(43) Veröffentlichungstag der Anmeldung :
31.08.83 Patentblatt 83/35

(45) Bekanntmachung des Hinweises auf die Patenterteilung : 24.04.85 Patentblatt 85/17

(84) Benannte Vertragsstaaten :
AT BE CH DE FR GB IT LI LU NL SE

(56) Entgegenhaltungen :
GB-A- 1 218 725

(73) Patentinhaber : BAYER AG
Konzernverwaltung RP Patentabteilung
D-5090 Leverkusen 1 Bayerwerk (DE)

(72) Erfinder : Broich, Bruno, Dr.
Althaustrasse 16
CH-8957 Spreitenbach (CH)
Erfinder : Müller, Hans-Jürgen, Dipl.-Biologe
Am Mittelberg 7a
D-5090 Leverkusen 1 (DE)
Erfinder : Lehnert, Günther, Dr.
Saarstrasse 48
D-5090 Leverkusen 1 (DE)
Erfinder : Schneider, Gottfried, Dr.
Paul-Klee Strasse 62
D-5090 Leverkusen 1 (DE)
Erfinder : Sobania, Udo, Dipl.-Ing.
Steinbeck 92
D-5600 Wuppertal 1 (DE)

## Beschreibung

Kristalline Stoffe werden im allgemeinen bei einer charakteristischen Temperatur flüssig und bilden eine isotrope Phase. Es gibt jedoch viele organische Verbindungen, die beim Schmelzen nicht vom Anisotrop-festen in den isotrop-flüssigen Aggregatzustand übergehen, sondern erst eine anisotrop-flüssige Mesophase bilden. Man kann im wesentlichen drei Gruppen unterscheiden, und zwar « smektische », « nematische » und « cholesterinische » Flüssigkristalle.

Verbindungen mit cholesterinischer Mesophase — es handelt sich hierbei vorwiegend um Derivate des Cholesterins — besitzen im flüssigkristallinen Zustand die Eigenschaft, auf Temperaturänderungen mit leuchtenden Farberscheinungen zu reagieren, die im weißen Tages- oder Kunstlicht wahrnehmbar sind. Innerhalb eines für die Verbindung charakteristischen Temperaturintervalles wird beim Erwärmen die gesamte Farbskala von Rot bis Violett durchlaufen. Da dieser Vorgang reversibel ist, hat man eine einfache Möglichkeit, Oberflächentemperaturen zu messen, Temperaturdifferenzen durch Farbunterschiede sichtbar zu machen und dynamische Vorgänge — wie Wärmeausbreitungsprozesse — visuell zu verfolgen. Die auftretenden Farben sind keine Eigenschaften der Substanzen, sondern beruhen auf der Eigenschaft der cholesterinischen Mesophase, das Licht doppelt zu brechen und zirkular zu polarisieren. Verhindert man durch eine schwarze Unterlage, daß Reflektionen an der unteren Grenzfläche einer flüssigkristallinen Cholesterinschicht auftreten, so läßt sich das oben beschriebene Farbenspiel besonders gut erkennen. Unterhalb und oberhalb des betreffenden Temperaturbereiches, in dem die Farben einander ablösen, erscheint die flüssigkristalline Schicht auf dem schwarzen Untergrund farblos. Die Temperatur, bei der die Flüssigkristallschicht beginnt, sich rot zu färben, wird als « Rottemperatur » bezeichnet. Entsprechend werden unter dem Begriff « Farbtemperaturen » diejenigen Temperaturen verstanden, bei denen die Farben rot, grün, blau nacheinander erscheinen. Die Farbtemperaturen sind von der genauen Zusammensetzung des Flüssigkristallgemisches abhängig, das in der Regel aus drei verschiedenen Cholesterinderivaten besteht.

Die temperaturbedingte Farbänderung cholesterinischer Flüssigkristalle hat man sich zunutze gemacht in der Werbung oder zur Erfassung von Oberflächentemperaturen in der Materialprüfung oder der Medizin. In der medizinischen Anwendung werden lokale Temperaturerhöhungen der Hautoberfläche festgestellt, deren Ursprung beispielsweise in krankhafter Veränderung des Gewebes oder der Blutgefäße liegt. Die zu untersuchende Körperfläche wird zur besseren Sichtbarmachung des Farbeffektes mit einem wasserlöslichen schwarzen Lack beschichtet, worauf die cholesterinische Substanz oder eine entsprechende Mischung in Form einer Lösung aufgetragen wird. Durch das entstehende Farbbild können krankhafte Veränderungen frühzeitig diagnostiziert werden.

Dieses als Thermographie bezeichnete Verfahren wird wesentlich vereinfacht durch handelsübliche Thermographiefolien, die auf die Hautoberfläche aufgelegt werden und eine farbiges Abbild der Hauttemperatur liefern. Diese Folien enthalten im allgemeinen eine temperaturempfindliche Flüssigkristallschicht zwischen einer schwarzen Trägerfolie und einer transparenten Deckfolie. Vielfach werden die cholesterinischen Flüssigkristalle erst mikroverkapselt und dann die Mikrokapseln in einem polymeren Träger eingebettet (vergl. z. B. DE-PS 25 36 773).

Die Wirkung energiereicher Röntgen- und $\gamma$-Strahlung auf das Farbverhalten cholesterinischer Flüssigkristalle ist bekannt und in der wissenschaftlichen Literatur beschrieben.

Als erster berichtete Fergason über die Erniedrigung der Farbtemperaturen von cholesterinischen Flüssigkristallen durch Röntgenbestrahlung (GB-PS 1 218 725 (1971)). Eine israelische Gruppe berichtet 1976 über die Wirkung von $\gamma$-Strahlung auf gelöste Cholesteringemische und auf kommerzielle ELC-Folien (Radiation Effects *32* (1977) 67 ; Int. J. Appl. Rad. and Isotopes *27* (1976) 722.

Es wäre prinzipiell möglich, diesen Strahlungseffekt technisch auszunutzen, um Cholesteringemische bzw. ELC-Folien mit bestimmten Farbtemperaturen herzustellen. Dazu wären jedoch hochintensive $\gamma$-Strahler (z. B. eine Kobalt[60]-Quelle) erforderlich. Um den notwendigen Strahlenschutz zu gewährleisten. müßten erhebliche Sicherheitsvorkehrungen getroffen werden. Hinzu kommt, daß bei einer vorgegebenen $\gamma$-Strahlenquelle die Strahlungsdosis nur durch die Geometrie der Versuchsanordnung variiert werden kann. Dies führt dazu, daß es im allgemeinen schwierig ist, ein und dieselbe Dosis reproduzierbar einzustellen, so daß die Genauigkeit des Verfahrens zu wünschen übrig läßt.

Hier setzt die Erfindung an. Es bestand die Aufgabe, ein einfaches und trotzdem sehr genaues Verfahren anzugeben, um die Temperatursensibilität bzw. die Farbtemperaturen cholesterinischer Flüssigkristalle oder von Thermographiefolien auf basis solcher Flüssigkristalle systematisch und gezielt zu verändern. Dabei sollte die Abstufung, insbesondere bei Thermographie-Folien für medizinische Anwendungszwecke so fein sein, daß z. B. ein Satz von Thermographiefolien bereitgestellt werden kann, die sich in ihrer Rottemperatur jeweils nur um 0,5 °C unterscheiden.

Diese Aufgabe wird erfindungsgemäß dadurch gelöst, daß die Flüssigkristalle einer energiereichen Elektronenstrahlung (vorzugsweise 0,05 bis 20 MeV, insbesondere 0,2 bis 5 MeV) mit einstellbarer Dosis ausgesetzt werden. Die Bestrahlungsstärke läßt sich einfach und sehr genau über die Beschleunigungsspannung und die Strahlstromstärke des Elektronenstrahles einstellen. Zur Erzeugung des Elektronenstrahls können handelsübliche Elektronenquellen (z. B. ein van de Graaff-Generator) benutzt werden.

Bei den Flüssigkristallen kann es sich um ein einzelnes Cholesterinderivat oder um eine Mischung verschiedener Derivate handeln. Zur Einstellung der Farbtemperaturen einer Thermographiefolie wird die gesamte Folie mit Elektronen bestrahlt.

Es hat sich herausgestellt, daß sich die Farbtemperaturen der Flüssigkristalle bei Bestrahlung mit Elektronen irreversibel in Richtung niedrigerer Temperaturen verschieben. Die Verschiebung ist linear mit der absorbierten Strahlungsdosis. Die Temperaturdifferenz von rot nach grün bzw. grün nach blau ändert sich durch die Bestrahlung praktisch nicht. Aus die Farbbrillanz bleibt unverändert. Der Effekt der Verschiebung des Farbspektrums zu niedrigeren Temperaturen wurde gleichermaßen bei verkapselten oder unverkapselten Flüssigkristallen und an Thermographiefolien auf der Basis von solchen Flüssigkristallschichten beobachtet.

Für Thermographiefolien, die in der medizinischen Diagnostik verwendet werden, bedarf es einer Vielzahl von Platten von unterschiedlichen Temperatursensibilitäten. Bisher wurden die verschiedenen Sensibilitäten durch spezielle Abmischungen der Flüssigkristalle erreicht.

Das neue Verfahren erlaubt es nun, in eleganter Weise, ausgehend von einer einzigen Flüssigkristallabmischung mit hoher Rottemperatur, nach Aufnahme einer entsprechenden Dosis/Temperaturverschiebungs-Eichkurve für diese Abmischung, jede gewünschte niedrigere Rottemperatur exakt einzustellen. Da sich die Dosis der Elektronenstrahlung ohne großen Aufwand sehr genau einstellen läßt, sind Abstufungen von 0,5 °C ohne weiteres möglich.

Eine Weiterentwicklung der Erfindung besteht darin, daß zur optischen Bild- oder Informationsspeicherung die Thermographiefolien mit Elektronen-absorbierenden Masken (z. B. Metallmasken) oder Schablonen abgedeckt werden. Bei Erwärmung der Folie entsteht dann ein farbiges Abbild der Maske auf der Folie. Auf diese Weise kann z. B. eine Thermographiefolie hergestellt werden, bei der sich die Temperatursensibilität nach Art eines Flächenmusters ändert. Insbesondere lassen sich Schriftzeichen, Ziffern, Temperaturskalen usw. sauber begrenzt und dauerhaft in Thermographiefolien einprägen.

Durch bildmäßige Modulation des Elektronenstrahles ist es auch möglich, daß irgendwelche Zeichen oder Symbole auf direktem Wege in die Thermographiefolie eingeschrieben werden. In beiden Fällen wird von dem Effekt Gebrauch gemacht, daß die Farbtemperaturen der bestrahlten Gebiete auf der Thermographiefolie gegenüber den unbestrahlten zu niedrigeren Tempeaturen verschoben sind.

Eine Abwandlung der Erfindung besteht darin, daß dieser Effekt ausgenutzt wird, um umgekehrt die Strahlungsdosis bei der Bestrahlung irgendeines Objektes mit Elektronen- oder β-Strahlen zu bestimmen. Zu diesem Zweck braucht nur eine Thermographiefolie an die entsprechende Stelle in das Strahlungsfeld gebracht zu werden und die durch die Elektronenstrahlen hervorgerufene Rotverschiebung anschließend mit Hilfe eines Photometers, das mit einem Temperatur-gesteuerten Meßtisch ausgestattet ist, gemessen zu werden. Bei solchen Untersuchungen wurde z. B. gefunden, daß die Verschiebung der Farbtemperatur über einen großen Dosisbereich von ca. 0 bis 30 Mrad linear erfolgt. Darüber hinaus muß für die Dosimetrie eine spezielle Eichung vorgenommen werden.

Gemäß einer weiteren Ausgestaltung der Erfindung ist es auch möglich, durch unterschiedlich lange Bestrahlungszeiten verschiedener Felder auf einer einzigen Folie Bereiche mit einer Vielzahl von Temperatursensibilitäten zu erzeugen. Insbesondere kann man z. B. auch auf einer Thermographiefolie mit einer einheitlichen Flüssigkristallmischung durch (dis) kontinuierliche Variation der Elektronenstrahldosis über die Ausdehnung der Folie (z. B. mittels eines Keiles oder durch (dis) kontinuierlichen Anstieg der Geschwindigkeit, mit welcher der Elektronenstrahl über die Folie geführt wird) erreichen, daß die Farbtemperatur sich über die Fläche der Folie hinweg kontinuierlich bzw. diskontinuierlich ändert. Man erhält auf diese Weise ein Thermometer, auf dem die Temperatur auf Grund der Lage der Grenzlinie zwischen den verschiedenfarbigen Bereichen abgelesen werden kann.

Beispiel 1

Eine Flüssigkristallmischung mit 68,4 Gew.-% Cholesterin-Nonanoat, 24,6 Gew.-% Cholesterin-Oleylcarbonat, 6,8 Gew.-% Cholesterin-Oleylcarbonat, 6,8 Gew.-% Cholesterin-Chlorid und 0,2 Gew.-% eines Stabilisators wurde hergestellt und die Lage des Rotpunktes zu 32 °C fotometrisch bestimmt. Die Elektronenbestrahlung erfolgte mit Hilfe eines van de Graaff-Generators an Luft bei Raumtemperatur. Die Elektronenstrahlenergie konnte eingestellt werden auf Werte zwischen 0,1 und 4 MeV bei einer Variation der Strahlstromstärke von 1 μA-100 mA. Bevorzugt wurde mit einem Wertepaar von 2 MeV und 100 μA gearbeitet. Die insgesamt wirksam gewordene Elektronendosis wurde durch die Expositionszeit systematisch variiert. Der Zusammenhang zwischen Elektronendosis und absorbierter Strahlungsleistung in Mrad wurde durch Eichsubstanzen bestimmt. Das auf eine geschwärzte Platte aufgetragene Gemisch wurde mit einer stufenweise erhöhten Elektronendosis bestrahlt und die Verschiebung des Rotpunktes jedesmal gemessen. Der Zusammenhang zwischen absorbierter Strahlungsdosis und Erniedrigung des Rotpunktes war linear und betrug (0,47 ± 0,03) °C pro 1 Mrad absorbierter Strahlungsdosis.

**Beispiel 2**

Wie Beispiel 1, nur wurde die Nonanoatkomponente jeweils alleine mit zunehmender Dosis bestrahlt und anschließend das Gemisch mit einer Zusammensetzung wie in Beispiel 1 fotometrisch vermessen. Die Rotpunktverschiebung betrug $(0{,}85 \pm 0{,}04)\,°C$ pro 1 Mrad absorbierter Strahlungsdosis.

**Beispiel 3**

Handelsübliche Bayer-ELC-Thermographiefolien wurden mit Elektronenstrahldosen zwischen 1 und 24 Mrad bestrahlt. Die Erniedrigung der Farbtemperaturen betrug in allen Versuchen $(0{,}61 \pm 0{,}03)\,°C$ pro 1 Mrad absorbierter Strahlungsdosis.

**Beispiel 4**

Handelsübliche Bayer-ELC-Thermographiefolien mit einer Rottemperatur von $34\,°C$ wurden mit Elektronen bestrahlt und die Dosis jeweils um 1 Mrad erhöht. Nach Maßgabe der Steigung in Beispiel 3) erhält man Thermographiefolien mit Rottemperaturen von $33{,}4\,°C$, $32{,}8\,°C$ usw.

**Beispiel 5**

Eine handelsübliche Bayer-ELC-Thermographiefolie wurde mit einer Schablone (2 mm Messingblech) aus der Buchstaben, Ziffern, Symbole usw. herausgefräst waren, abgedeckt und mit Elektronen bestrahlt. Je nach Strahlungsdosis erhielt man ein unterschiedlich gefärbtes, scharfes Abbild der Schablone auf der Folie. Durch eine genau einstellbare Strahlungsdosis ließen sich durch diese Verfahren Thermometer mit Zahlenangaben herstellen.

**Beispiel 6**

Ein zu bestrahlendes Objekt wurde gleichzeitig mit einer handelsüblichen Bayer-ELC-Thermographiefolie bestrahlt und diese dann fotometrisch vermessen. Die Erniedrigung der Rottemperatur in der Folie war ein genaues Maß für die absorbierte Strahlungsdosis im Objekt. Nach der gleichen Methode wurde die Strahlungsintensität einer $\beta$-Strahlungsquelle ermittelt.

**Patentansprüche**

1. Verfahren zur Herstellung von cholesterinischen Flüssigkristallen mit einer bestimmten Farbtemperatur, dadurch gekennzeichnet, daß man Flüssigkristalle mit einer Farbtemperatur, die oberhalb der gewünschten Farbtemperatur liegt, mit energiereicher Elektronenstrahlung in der erforderlichen Dosis bestrahlt.

2. Verfahren nach Anspruch 1, dadurch gekennzeichnet, daß eine mit den Flüssigkristallen beschichtete Thermographiefolie bestrahlt wird.

3. Verfahren nach Anspruch 1 oder 2, dadurch gekennzeichnet, daß die Elektronenstrahlenergie zwischen 0,05 und 20 MeV liegt.

4. Thermographische Folie mit Bereichen unterschiedlicher Farbtemperatur, dadurch gekennzeichnet, daß die Folie mit einer einheitlichen Mischung von Flüssigkristallen beschichtet ist und die unterschiedlichen Farbtemperaturen durch Bestrahlung der Bereiche mit energiereicher Elektronenstrahlung erhalten wurden.

5. Folie nach Anspruch 4, dadurch gekennzeichnet, daß sich die Farbtemperatur über die Flächenausdehnung der Folie hinweg kontinuierlich ändert.

6. Verfahren zur Einstellung der Temperatursensibilität bzw. der Farbtemperaturen cholesterinischer Flüssigkristalle, dadurch gekennzeichnet, daß die Flüssigkristalle einer energiereichen Elektronenstrahlung mit einstellbarer Dosis ausgesetzt werden.

7. Verfahren nach Anspruch 5, dadurch gekennzeichnet, daß eine mit Flüssigkristallen beschichtete Thermografiefolie verwendet wird und die Thermographiefolie mit Elektronen bestrahlt wird.

8. Verfahren nach Anspruch 7, dadurch gekennzeichnet, daß zur optischen Bild- oder Informationsspeicherung die Thermografiefolien mit elektronenstrahlabsorbierenden Masken oder Schablonen abgedeckt werden.

9. Verfahren nach Anspruch 7, dadurch gekennzeichnet, daß zur optischen Bild- oder Informationsspeicherung mit Hilfe eines fokussierten und ablenkbaren Elektronenstrahles Zeichen bzw. Symbole in die Thermografiefolie eingeschrieben werden.

10. Verwendung von cholesterinischen Flüssigkristallen oder Thermografiefolien auf Basis von Flüssigkristallen zur Dosismessung von Elektronenstrahlen (bzw. $\beta$-Strahlen).

**Claims**

1. Process for the production of cholesteric liquid crystals having a particular colour temperature, characterised in that liquid crystals having a colour temperature which is above the required colour temperature are irradiated with the required dose of high-energy electron radiation.

2. Process according to Claim 1, characterised in that a thermographic film coated with the liquid crystals is irradiated.

3. Process according to Claim 1 or 2, characterised in that the energy of the electron beam is between 0.05 and 20 MeV.

4. Thermographic film with areas of differing colour temperature, characterised in that the film is coated with a homogeneous mixture of liquid crystals and the differing colour temperatures have been obtained by irradiating the areas with high-energy electron radiation.

5. Film according to Claim 4, characterised in that the colour temperature changes continuously over the extent of the surface of the film.

6. Process for adjusting the temperature-sensitivity or colour temperatures of cholesteric liquid crystals, characterised in that the liquid crystals are exposed to an adjustable dose of high-energy electron radiation.

7. Process according to Claim 6, characterised in that a thermographic film coated with liquid crystals is used, and the thermographic film is irradiated with electrons.

8. Process according to Claim 7, characterised in that, for optical storage of the image or information, the thermographic films are covered with masks or stencils which absorb electron beams.

9. Process according to Claim 7, characterised in that, for optical storage of the image or information, signs or symbols are written into the thermographic film with the aid of a focused and deflectable electron beam.

10. Use of cholesteric liquid crystals or thermographic films bases on liquid crystals, for measuring the dose of electron beams (or β-rays).

**Revendications**

1. Procédé de préparation de cristaux liquides cholestériques ayant une température de couleur déterminée, caractérisé en ce qu'on irradie des cristaux liquides d'une température de couleur supérieure à la température de couleur désirée, avec des rayons d'électrons riches en énergie dans la dose requise.

2. Procédé suivant la revendication 1, caractérisé en ce qu'on irradie une feuille thermographique enduite des cristaux liquides.

3. Procédé suivant la revendication 1 ou 2, caractérisé en ce que l'énergie des rayons d'électrons se situe entre 0,05 et 20 MeV.

4. Feuille thermographique comportant des zones ayant des températures de couleurs différentes, caractérisée en ce que cette feuille est enduite d'un mélange homogène de cristaux liquides, tandis que l'on a obtenu les températures de couleurs différentes par irradiation des zones avec des rayons d'électrons riches en énergie.

5. Feuille suivant la revendication 4, caractérisée en ce que la température de couleur change continuellement sur l'étendue superficielle de la feuille.

6. Procédé en vue de régler la sensibilité thermique ou les températures de couleurs de cristaux liquides cholestériques, caractérisé en ce qu'on expose les cristaux liquides à un rayonnement d'électrons riches en énergie en une dose réglable.

7. Procédé suivant la revendication 6, caractérisé en ce qu'on utilise une feuille thermographique enduite de cristaux liquides et on irradie la feuille thermographique avec des électrons.

8. Procédé suivant la revendication 7, caractérisé en ce que, pour la mémorisation optique d'images ou d'informations, on recouvre les feuilles thermographiques de gabarits ou de masques absorbant les rayons d'électrons.

9. Procédé suivant la revendication 7, caractérisé en ce que, pour la mémorisation optique d'images ou d'informations, on inscrit des caractères ou des symboles dans la feuille thermographique à l'aide d'un rayon d'électrons focalisé et orientable.

10. Utilisation de cristaux liquides cholestériques ou de feuilles thermographiques à base de cristaux liquides pour la mesure du dosage des rayons d'électrons (ou rayons β).